# EUROPEAN PATENT APPLICATION

(11) **EP 1 942 439 A2**
(43) Date of publication of application: **09.07.2008**
(21) Application number: 07255061.9
(22) Date of filing: 27.12.2007
(51) Int. Cl.: G06F 21/24

(54) **Document management system, method, and program, and image forming apparatus**

(30) Priority: 28.12.2006 JP 2006355644
(71) Applicant: Ricoh Company, Ltd., Tokyo 143-8555 (JP)
(72) Inventor: Sugai, Takeshi, Tokyo (JP); Yoshinaga, Tsuyoshi, Tokyo (JP); Saitoh, Juri, Yokohama-shi Kanagawa (JP)
(74) Representative: Lamb, Martin John Carstairs

(57) **Abstract**

A disclosed document management system reduces the risk of information leakage and prevents an operation error by simplifying operations. The document management system includes an image forming apparatus with a scan unit for scanning a paper document into digitized document data; a user authentication server for user authentication; and an encrypted document server having encrypted folders for storing encrypted document data based on the access right of a user. The image forming apparatus includes an encryption unit configured to encrypt document data and a delivery unit configured to deliver encrypted document data to one of the folders in the encrypted document server to which access is allowed based on the access right of a user authenticated by the authentication server.

## Description

### BACKGROUND OF THE INVENTION

### 1. Field of the Invention

The present invention relates to systems, methods, and programs for managing document data, and to image forming apparatus.

### 2. Description of the Related Art

In the field of technologies for managing classified documents, systems are known whereby a classified document is digitized and then encrypted. In such a system, a classified document in paper form is scanned by an image forming apparatus having a scan function to obtain digitized document data.

The digitized document data is then transmitted from the image forming apparatus via a network to a client terminal, where it is stored in a folder or the like. Upon user instruction, the document data is encrypted in the client terminal, and the encrypted document data is sent from the client terminal to a server. In the server, the encrypted document data is stored at a location designated by the user.

Thus, in such a conventional technology, a certain level of security is considered with regard to the management of the document data after the paper document is digitized. However, no consideration is given in terms of security between the phase of digitizing the paper document into document data and the phase of managing the document data.

This means that, in the above conventional system, the scanned document data is transmitted to the client terminal in clear text form without being encrypted, thereby potentially compromising the data. Further, in the conventional system, since it is a user who gives an instruction for encrypting document data and an instruction for storing it in the server, operations are complicated and the frequency of an operation error could increase.

It is a general object of the present invention to overcome the aforementioned problems.

A more specific object of the invention is to provide a document management system whereby the risk of information leakage can be avoided, operations can be simplified, and operation errors can be prevented.

### SUMMARY OF THE INVENTION

In one aspect, the invention provides a document management system comprising an image forming apparatus having a scan unit configured to scan a paper document into document data; a user authentication server configured to authenticate a user in which server user information including user identifying information is stored; and a document server. The image forming apparatus comprises a destination selection unit configured to select a destination in the document server where the document data obtained by the scan unit is to be stored; and a delivery unit configured to deliver the document data to the destination in the document server selected by the destination selection unit.

In this system, the risk of information leakage can be reduced, operations can be simplified, and the frequency of making an operation error can be reduced.

In a preferred embodiment, the user information stored in the authentication server includes information about an access right of the user, and the document server contains an encrypted folder for storing the document data. In this embodiment, the image forming apparatus further includes a list acquisition unit configured to acquire a list of encrypted folders in the encrypted document server that can be accessed based on the access right of the user authenticated by the user authentication server. The destination selection unit of the image forming apparatus includes a folder selection unit configured to select one of the encrypted folders in the list acquired by the list acquisition unit, as the destination for storing the document data. The delivery unit of the image forming apparatus is configured to deliver the document data to the encrypted folder selected by the folder selection unit.

In this system, the risk of information leakage can be reduced, operations can be simplified, and the frequency of making an operation error can be reduced.

In another preferred embodiment, the document server includes a mail transmission server, and the image forming apparatus further comprises an address selection unit configured to select a mail address. The delivery unit is configured to deliver the document data obtained by the scan unit and a mail address selected by the address selection unit to the mail transmission server.

Thus, the risk of information leakage can be reduced, operations can be simplified, and the frequency of making an operation error can be reduced.

In another preferred embodiment, the image forming apparatus further includes an encryption unit configured to encrypt the document data obtained by the scan unit. The delivery unit delivers the document data encrypted by the encryption unit to the destination in the document server selected by the destination selection unit.

Thus, the risk of information leakage can be further reduced.

In yet another preferred embodiment, the image forming apparatus further includes a destination setting unit configured to set information about a location in the document server, and the delivery unit delivers the document data to the document server based on the location information set by the destination setting unit.

Thus, the document data can be automatically delivered by simply selecting a destination, so that the operation for such delivery can be simplified.

In yet another preferred embodiment, the image forming apparatus includes a mail address setting unit configured to set a mail address, and the address selection unit selects the mail address from mail addresses set by the mail address setting unit.

Thus, the need to enter a mail address each time document data is transmitted by email can be eliminated, thereby simplifying the operation.

In yet another embodiment, the encryption unit is configured to encrypt the document data with reference to the user identifying information concerning the user authenticated by the user authentication server.

Thus, the operation for decrypting the encrypted document data can be simplified.

In yet another preferred embodiment, the image forming apparatus further includes a log information acquisition unit configured to acquire operation history information regarding an operation in the image forming apparatus; and a log storage device configured to store the operation history information acquired by the log information acquisition unit.

Thus, the source of information leakage can be tracked in case such leakage should occur.

In yet another embodiment, the image forming apparatus further includes a scan condition setting unit configured to set a scan condition based on which the scan unit performs a scan.

Thus, the need to set scan conditions each time a paper document is scanned can be eliminated, thereby simplifying the operation.

In another aspect, the invention provides an image forming apparatus connected to a user authentication server for authenticating a user in which server user information including user identifying information is stored. The image forming apparatus is further connected to a document server. The image forming apparatus comprises a scan unit configured to scan a paper document into document data; an encryption unit configured to encrypt the document data obtained by scanning the paper document by the scan unit; a destination selection unit configured to select a destination in the document server where the document data encrypted by the encryption unit is to be stored; and a delivery unit configured to deliver the encrypted document data to the destination in the document server selected by the destination selection unit.

In this apparatus, the risk of information leakage can be reduced, operations can be simplified, and the frequency of making an operation error can be reduced.

In a preferred embodiment, the user identifying information stored in the user authentication server includes information about an access right of a user, and the document server contains an encrypted folder for storing encrypted data. The image forming apparatus further includes a list acquisition unit configured to acquire a list of encrypted folders in the document server that can be accessed based on the access right of the user authenticated by the user authentication server. The destination selection unit of the image forming apparatus includes a folder selection unit configured to select one of the encrypted folders in the list acquired by the list acquisition unit, as the destination for storing the encrypted document data. The delivery unit of the image forming apparatus is configured to deliver the document data encrypted by the encryption unit to the encrypted folder selected by the destination selection unit.

Thus, the risk of information leakage can be reduced, operations can be simplified, and the frequency of making an operation error can be reduced.

In yet another preferred embodiment, the document server includes a mail transmission server. The image forming apparatus further includes an address selection unit configured to select a mail address. The delivery unit is configured to deliver the document data encrypted by the encryption unit and a mail address selected by the address selection unit to the mail transmission server.

Thus, the risk of information leakage can be reduced, operations can be simplified, and the frequency of making an operation error can be reduced.

In yet another aspect, the invention provides a document management method for a document management system including an image forming apparatus having a scan unit configured to scan a paper document into document data; a user authentication server configured to authenticate a user in which server user information including user identifying information is stored; and a document server. The method comprises the image forming apparatus encrypting the document data obtained by scanning the paper document by the scan unit; selecting a destination in the document server where the document data encrypted by the encryption unit is to be stored; and delivering the encrypted document data to the destination in the document server selected by the destination selecting step.

In this method, the risk of information leakage can be reduced, operations can be simplified, and the frequency of making an operation error can be reduced.

In a preferred embodiment, the user identifying information stored in the user authentication server includes information about an access right of a user, and the document server contains an encrypted folder for storing document data. In this embodiment, the method further comprises the image forming apparatus acquiring a list of encrypted folders in the encrypted document server that can be accessed based on the access right of the user authenticated by the user authentication server; selecting one of the encrypted folders in the list acquired by the list acquiring step, as the destination for storing the encrypted document data; and delivering the document data encrypted by the encryption unit to the encrypted folder selected by the folder selecting step.

In this method, the risk of information leakage can be reduced, operations can be simplified, and the frequency of making an operation error can be reduced.

In yet another preferred embodiment, the document server comprises a mail transmission server, and the method further comprises the image forming apparatus selecting a mail address; and delivering the document data encrypted by the encrypting step and the mail address selected by the address selecting step to the mail transmission server.

In this method, the risk of information leakage can be reduced, operations can be simplified, and the frequency of making an operation error can be reduced.

The invention may also provide a computer-readable program for realizing each of the functions of the above image forming apparatus or the steps of the above document management methods. The program may be recorded in a computer-readable recording medium.

These and other objects, advantages and features of the invention are described in conjunction with the accompanying drawings.

### BRIEF DESCRIPTION OF THE DRAWINGS

FIG. 1 shows a system configuration of a document management system 100 according to a first embodiment of the invention;
FIG. 2 shows a block diagram for briefly describing the operation of the document management system 100;
FIG. 3 shows a functional configuration of an image forming apparatus 200, a user authentication server 300, and an encrypted document server 400 in the first embodiment of the invention;
FIG. 4 shows a drawing for describing a delivery destination setting unit 265 and a scan condition setting unit 266 of the image forming apparatus 200;
FIG. 5 shows a flowchart of an operation of the document management system 100 of the first embodiment;
FIG. 6 shows an operating panel 250 of the image forming apparatus 200 on which a login screen is displayed;
FIG. 7 shows the operating panel 250 on which a list of encrypted folders that can be accessed on the image forming apparatus 200 are shown;
FIG. 8 illustrates how a display layout of the operating panel 250 of the image forming apparatus 200 is set;
FIG. 9 shows the operating panel 250 of the image forming apparatus 200 on which scan condition setting information are shown;
FIG. 10 shows a system configuration of a document management system 100A according to a second embodiment of the invention;
FIG. 11 shows a functional configuration of an image forming apparatus 200A, a user authentication server 300, and a document server 500 of the second embodiment;
FIG. 12 shows a flowchart of an operation of the document management system 100A;
FIG. 13 shows a system configuration of a document management system 100B according to a third embodiment of the invention;
FIG. 14 shows a functional configuration of an image forming apparatus 200B, a user authentication server 300, and a mail transmission server 600 of the third embodiment;
FIG. 15 is a drawing for describing a destination address setting unit 265A of the image forming apparatus 200B;
FIG. 16 shows a flowchart of an operation of the document management system 100B;
FIG. 17 shows the operating panel 250 of the image forming apparatus 200B on which a list of destination addresses is shown;
FIG. 18 shows a setting screen displayed on the operating panel 250 of the image forming apparatus 200B;
FIG. 19 shows the operating panel 250 of the third embodiment on which a selected destination address is shown; and
FIG. 20 shows a block diagram for describing a recording medium in which a document management program for realizing the individual functions of each of the embodiments of the invention is stored.

### DETAILED DESCRIPTION OF THE PREFERRED EMBODIMENTS

An image forming apparatus according to the present invention comprises a scan unit configured to scan a paper document into digitized document data, a user authentication server configured to authenticate a user, and an encrypted document server having an encrypted folder in which document data can be stored based on an access right possessed by a user. The image forming apparatus is configured to deliver the document data obtained by the scan unit to the encrypted document server. In the encrypted document server, the delivered document data is stored in an encrypted folder to which access is allowed based on the access right of the user authenticated by the user authentication server.

### Embodiment 1

In the following, a first embodiment of the present invention is described with reference to the drawings.

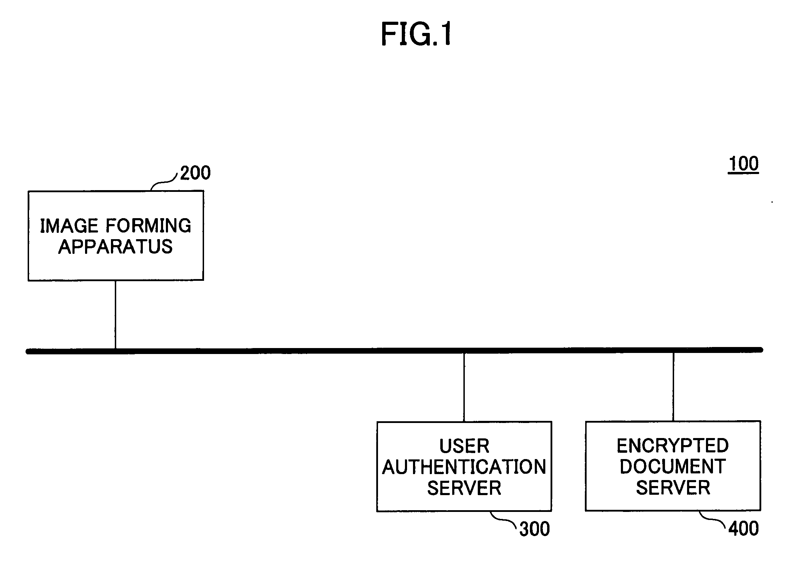

FIG. 1 shows a system configuration of a document management system 100 according to the first embodiment. The document management system 100 comprises an image forming apparatus 200, a user authentication server 300, and an encrypted document server 400, which are connected via a network such as a LAN.

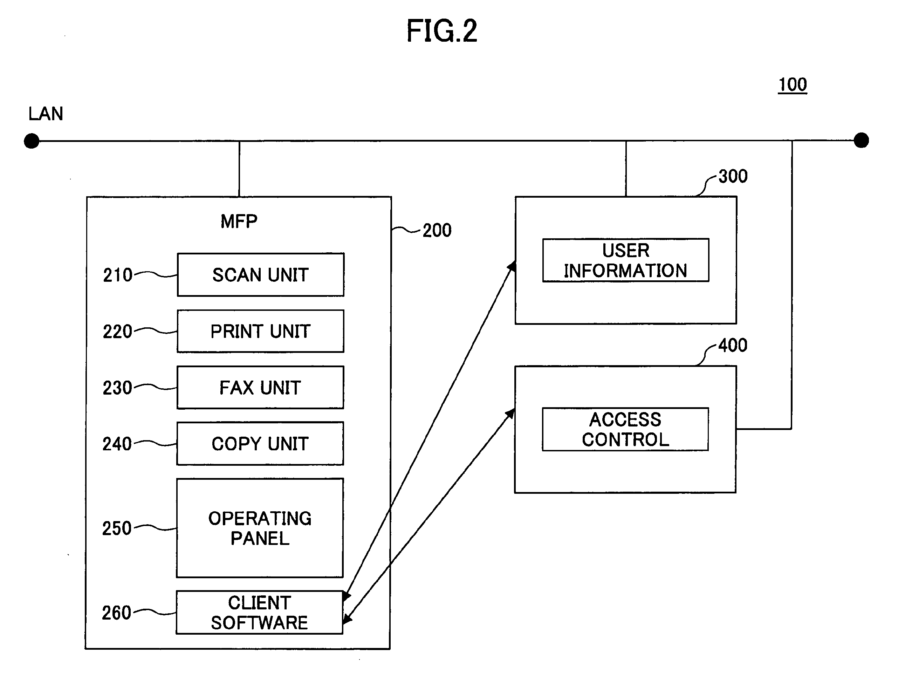

With reference to FIG. 2, the operation of the document management system 100 is briefly described.

The image forming apparatus 200 is a multifunction peripheral, comprising a scan unit 210, a print unit 220, a FAX unit 230, a copy unit 240, an operating panel 250, and a client software 260.

The scan unit 210 is configured to scan a paper document to obtain document data. The print unit 220 is configured to perform printing in response to an instruction from a print requesting terminal which may be connected with the image forming apparatus 200 via the network. The FAX unit 230 is configured to transmit and receive facsimiles. The copy unit 240 is configured to copy paper manuscripts.

The operating panel 250, which may comprise a touch panel formed on a display panel, is configured to allow the entry of various operations into the image forming apparatus 200. The client software 260 is configured to coordinate the image forming apparatus 200 with the user authentication server 300 and the encrypted document server 400 so that the functions of the image forming apparatus 200 can be realized.

The user authentication server 300 is configured to hold user information and manage access rights to the encrypted document server 400 for individual users. The encrypted document server 400 is configured to generate an encrypted folder and control access to the encrypted folder based on the access right of each user. In an encrypted folder generated by the encrypted document server 400, document data delivered from an access-authorized user is stored.

In the document management system 100 of the present embodiment, as a user performs a login operation on the operating panel 250 of the image forming apparatus 200, a user authentication process is performed by the user authentication server 300. If the user authentication by the user authentication server 300 is successful, the user with his access right can access, via the image forming apparatus 200, an encrypted folder within the encrypted document server 400. Thus, in the present embodiment, classified document data or the like obtained by performing a scan on the image forming apparatus 200 can be directly registered in the encrypted document server 400 from the image forming apparatus 200.

The user authentication server 300 and/or the encrypted document server 400 is realized by installing a general computer, such as a personal computer, with server software configured to realize the above server functions. The image forming apparatus 200 is realized by installing a general image forming apparatus with client software 260 configured to realize the above client functions.

An example of a software product whereby a server and a client in a system can be each installed with software for encrypting document data to be managed, as in the present embodiment, is "Hibun" (registered trademark) available from Hitachi Software Engineering Co., Ltd. In the present embodiment, functions equivalent to those of a Hibun client may be implemented on the image forming apparatus 200. In this way, document data obtained by scanning a document on the image forming apparatus 200 can be encrypted in the image forming apparatus 200, and the encrypted document data can be directly stored in the encrypted document server 400 from the image forming apparatus 200.

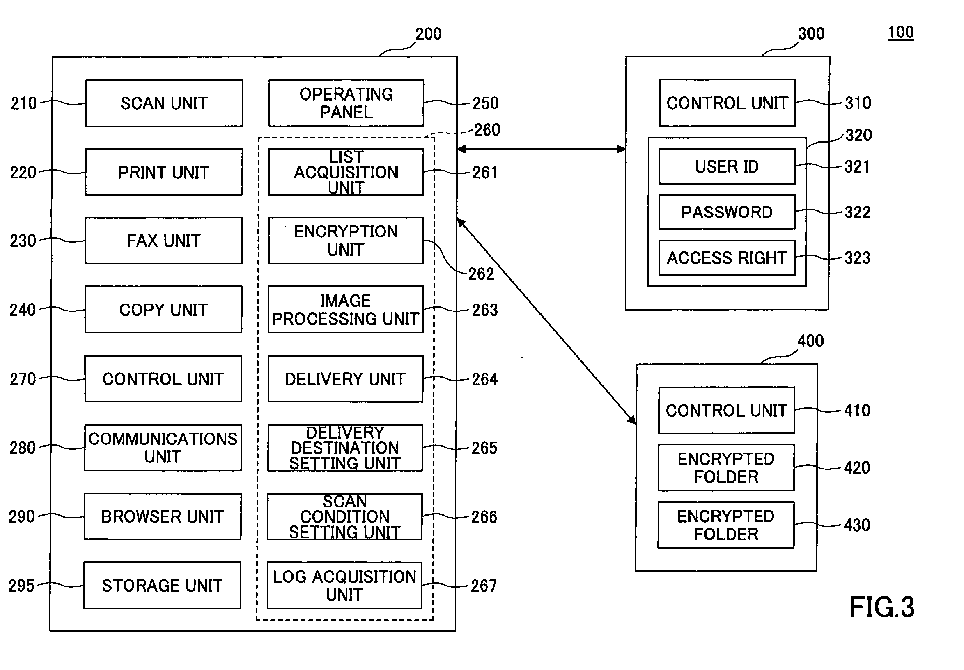

With reference to FIG. 3, each unit of the document management system 100 is further described. FIG. 3 shows a functional configuration of the image forming apparatus 200, the user authentication server 300, and the encrypted document server 400 according to the first embodiment.

The image forming apparatus 200 is described first.

The image forming apparatus 200 comprises a control unit 270, a communications unit 280, a browser unit 290, and a storage device 295, in addition to the scan unit 210, print unit 220, FAX unit 230, copy unit 240, operating panel 250, and client software 260.

The control unit 270 is configured to control various processes performed by the image forming apparatus 200. The communications unit 280 is configured to perform communications with the user authentication server 300 and the encrypted document server 400. The browser unit 290 comprises a Web browser allowing the viewing of Web pages and the like on the image forming apparatus 200 via a network. The storage device 295 may be realized with a memory or a hard disk; it stores various setting information and the like for the image forming apparatus 200.

The client software 260 is described in detail.

The client software 260 comprises a list acquisition unit 261, an encryption unit 262, an image processing unit 263, a delivery unit 264, a delivery destination setting unit 265, a scan condition setting unit 266, and a log information acquisition unit 267.

The list acquisition unit 261 is configured to acquire a list of encrypted folders generated in the encrypted document server 400. The encryption unit 262 is configured to encrypt document data obtained by scanning a document by the scan unit 210, as will be described in detail below. The image processing unit 263 is configured to convert the document data obtained by the scan unit 210 into a preset file format, as will be described in detail below. The delivery unit 264 is configured to deliver encrypted document data from the image forming apparatus 200 to the encrypted document server 400.

The delivery destination setting unit 265 is configured to set information about the location of each encrypted folder in the encrypted document server 400. The scan condition setting unit 266 is configured to set information about conditions for scanning by the scan unit 210. The delivery destination setting unit 265 and the scan condition setting unit 266 are described in detail below.

The log acquisition unit 268 is configured to acquire log information which represents operation history information about operations that have been performed in the image forming apparatus 200. The log information includes the name of a user of the image forming apparatus 200, date/time of operation, type of process, IP address of the image forming apparatus 200, and a history of access to the user authentication server 300 or the encrypted document server 400. The log information may be stored in the storage device 295 or a hard disk (not shown) of the image forming apparatus 200.

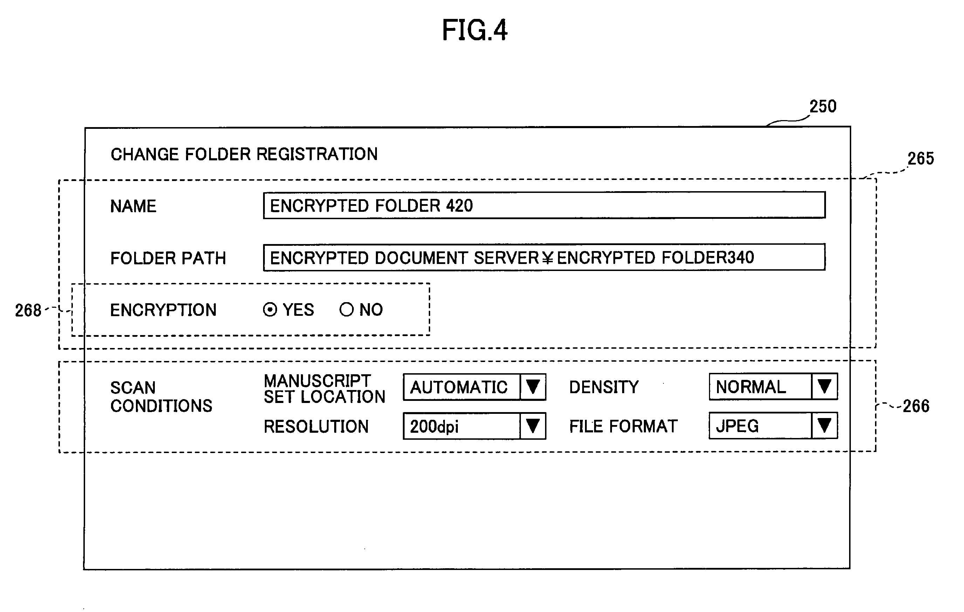

With reference to FIG. 4, the delivery destination setting unit 265 and the scan condition setting unit 266 are described.

In the image forming apparatus 200 of the present embodiment, the encrypted document server 400 can be accessed using the browser unit 290, and, while monitoring the status within the encrypted document server 400, information about the location of a folder as a destination and a scan condition, for example, can be set. A screen for making such settings is displayed by a function of the browser unit 290 on the operating panel 250 of the image forming apparatus 200. Namely, a setting screen shown in FIG. 4 is displayed on the operating panel 250.

The delivery destination setting unit 265 implemented on the setting screen shown in FIG. 4 is configured to set the name of a folder as a destination and a folder path indicating the location of the folder stored. The setting screen may be configured to display a list of encrypted folders that exist in the encrypted document server 400 in a pull-down fashion in the folder name box. The name of a folder selected from such a list may be automatically entered in the folder name box. Alternatively, the delivery destination setting unit 265 may be configured such that upon entry of the name of a folder in the folder name box, a folder path for the folder is automatically entered in the folder path box.

An encrypted folder and a folder path thus set are then stored in the storage device 295 of the image forming apparatus 200 associated with each other. When document data is delivered from the image forming apparatus 200, the encrypted folder and the folder path may be called up from the storage device 295 as destination information.

In this case, in the delivery destination setting unit 265, a setting may be made as to whether the delivered document data is to be encrypted. For example, in the setting screen shown in FIG. 4, an encryption setting unit 268 is implemented. Based on such a setting, the image forming apparatus 200 may determine whether document data is to be encrypted. If "Yes" is selected in the encryption setting unit 268 as shown in FIG. 4, relevant document data obtained by scanning is automatically encrypted in the image forming apparatus 200.

In the setting screen shown in FIG. 4, scan conditions are set for individual folders in the scan condition setting unit 266. The scan conditions that may be set include, as shown in FIG. 4, a location where a paper manuscript is set in the image forming apparatus 200; scan resolution; density; and file format for scanned document data. The file format may be PDF format, gif format, or tif format.

The information about scan conditions set in the scan condition setting unit 266 may be stored in the storage device 295, as in the case of destination information. The scan conditions thus set may be called out of the storage device 295 when the scan unit 210 performs a scan process. In the present example, the settings made via the delivery destination setting unit 265 and the scan condition setting unit 266 may be made by a system administrator.

Referring back to FIG. 3, the user authentication server 300 is described in detail.

The user authentication server 300 comprises a control unit 310 configured to control various processes performed by the user authentication server 300, and a user information storage unit 320. The user information storage unit 320 stores user information including user IDs 321, passwords 322, and access right 323. The access right 323 may be a right based on which an operation can be performed on an encrypted folder in the encrypted document server 400. For example, the access right 323 indicates whether an encrypted folder can be accessed; whether a data storing process can be performed on an encrypted folder; or whether a data reading process can be performed on an encrypted folder.

In the following, the encrypted document server 400 is described.

The encrypted document server 400 comprises a control unit 410 configured to control various processes performed in the encrypted document server 400, an encrypted folder 420, and an encrypted folder 430. The encrypted folders 420, 430 are folders individually encrypted in the encrypted document server 400. Access to the folder 420 or 430 is granted to a user who has the access right to the corresponding encrypted folder, whereby a process associated with the access right can be performed.

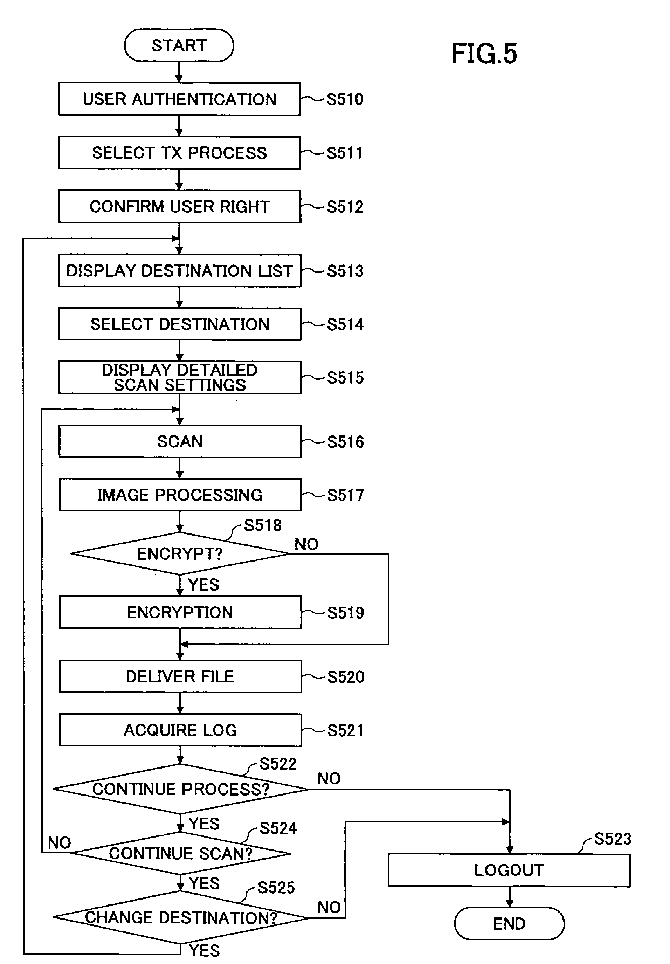

With reference to a flowchart shown in FIG. 5, an operation of the document management system 100 is described.

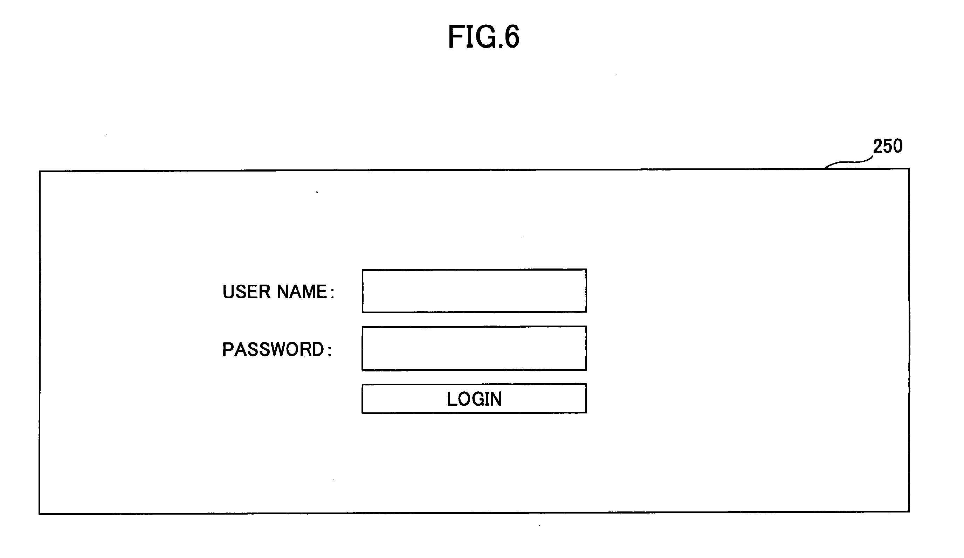

In the image forming apparatus 200, upon selection of a classified document managing process, the control unit 270 starts up the client software 260 and links the image forming apparatus 200, the user authentication server 300, and the encrypted document server 400. The control unit 270 then causes a user login screen to be displayed on the operating panel 250, as shown in FIG. 6.

Upon entry of user information, i.e., a user ID and a password, into the image forming apparatus 200 via the login screen, the user information is transmitted via the communications unit 280 to the user authentication server 300.

Upon reception of the user information, the user authentication server 300 determines whether the same user information as the received user information is stored in the user information storage unit 320. If the same user information is stored, the user is authenticated (S510). Upon authentication of the user by the user authentication server 300, the image forming apparatus 200 displays a process menu on the operating panel 250.

Upon selection of a process to transmit document data to the encrypted document server 400 (S511), the list acquisition unit 261 of the image forming apparatus 200 accesses the user authentication server 300 and references the access right of the user authenticated in S510 (S512). Then, the list acquisition unit 261 acquires from the encrypted document server 400 a list of encrypted folders in the server that can be accessed based on the access right (S513), and causes the list to be displayed on the operating panel 250 in a selectable manner.

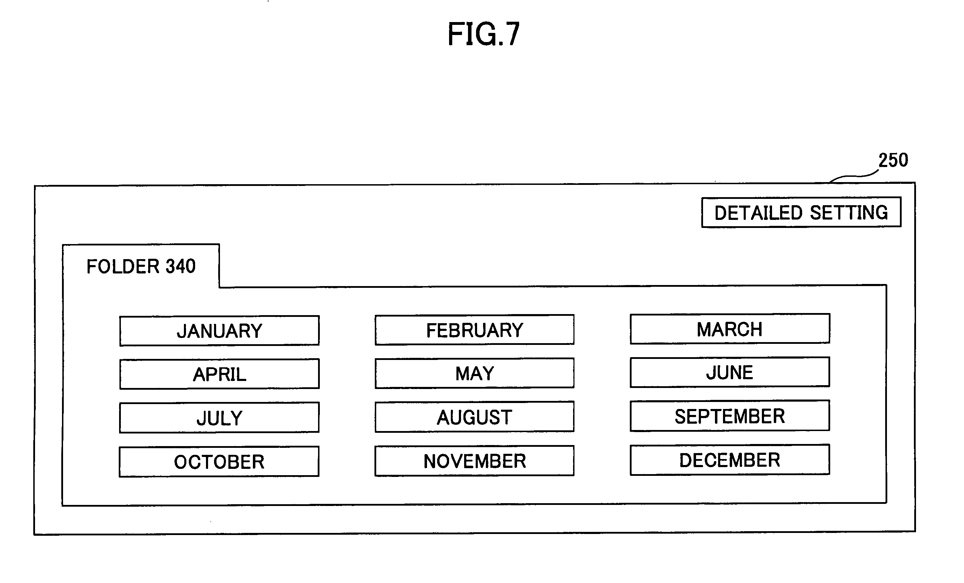

FIG. 7 shows the operating panel 250 of the image forming apparatus 200 displaying the list of encrypted folders that can be accessed. In the following, the display on the operating panel 250 is described.

In the present embodiment, the encrypted folder 340 is the sole encrypted folder that can be accessed based on the access right of the user authenticated in S510. Thus, the operating panel 250 of the image forming apparatus 200 displays the encrypted folder 340, together with a list of lower-level folders in the encrypted folder 340. In case there are no lower-level folders in the encrypted folder 340, the encrypted folder 340 may be displayed as the sole encrypted folder that can be accessed.

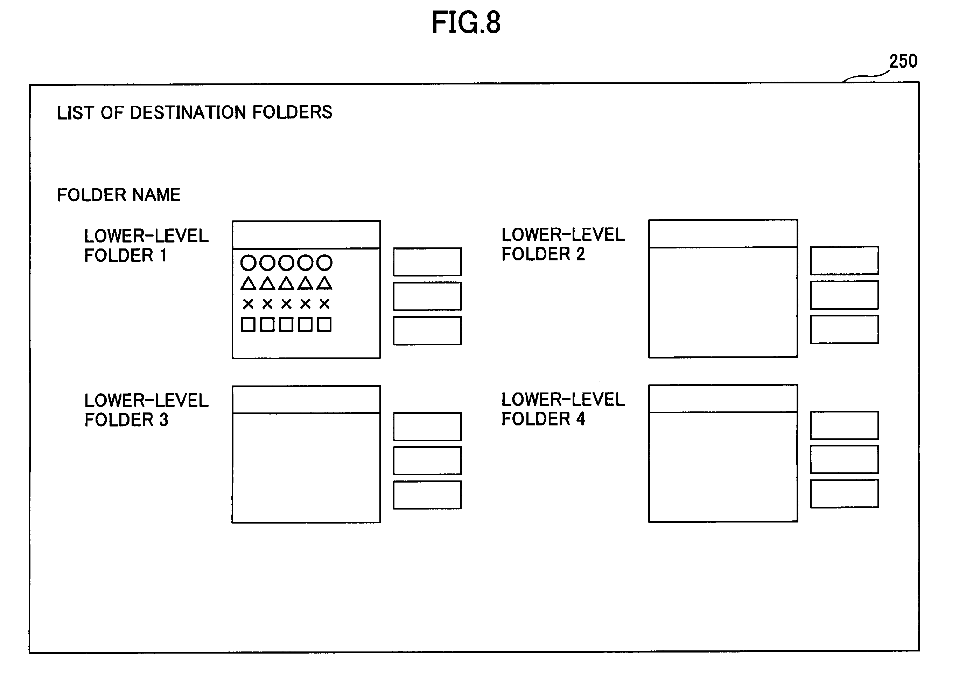

The display layout on the operating panel 250 may be set in advance in the image forming apparatus 200. Alternatively, the display layout may be set via a display layout setting screen displayed on the operating panel 250. For example, in the image forming apparatus 200, the browser unit 290 may access the encrypted document server 400, reference the list of encrypted folders in the encrypted document server 400, and cause a display layout setting screen to be displayed on the operating panel 250, as shown in FIG. 8.

On the display layout setting screen shown in FIG. 8, the display layout on the operating panel 250 is set in accordance with the layers of encrypted folders in the encrypted document server 400. In the example shown in FIG. 8, it can be seen that one encrypted folder exists in the encrypted document server 400, and there are four lower-level folders within that encrypted folder. In this case, the display layout for the list of the encrypted folder in S513 is such that a lower-level folder 1 is in the first column on the first line, a lower-level folder 2 is in the second column on the first line, and so on. The display layout in the present embodiment is configured such that the name of each folder can be entered via text data. These settings may be made by a system administrator in advance.

Referring back to FIG. 5, the operation of the document management system 100 of the present embodiment is further described.

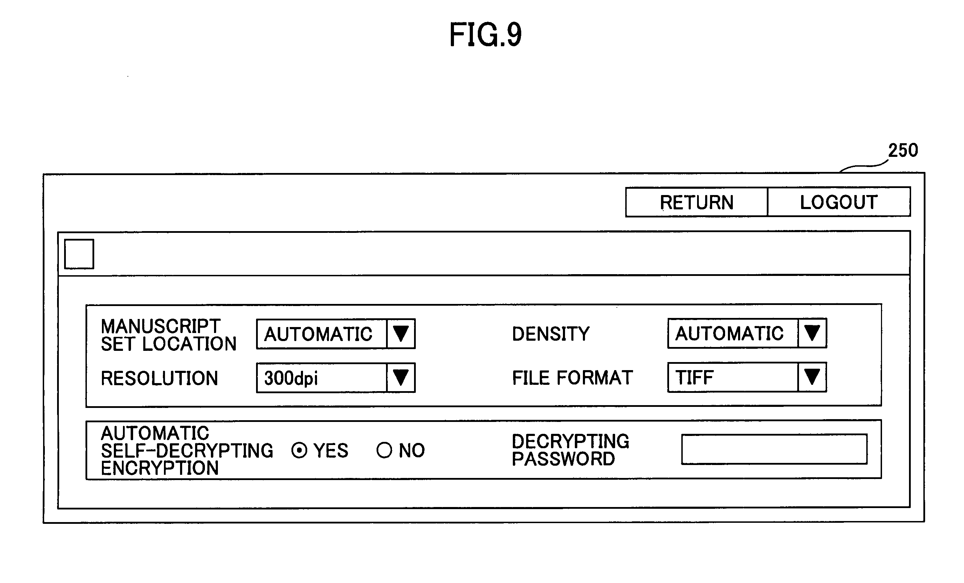

After the list of encrypted folders is displayed on the operating panel 250 of the image forming apparatus 200 in S513, the user selects an encrypted folder as a destination for the document data (S514). Upon such selection, the control unit 270 of the image forming apparatus 200 calls the associated scan condition settings, which are set in advance for each folder, from the storage device 295, and causes the settings to be displayed on the operating panel 250 (S515), as shown in FIG. 9.

After the scan conditions are displayed in S515, it becomes possible in the image forming apparatus 200 to perform a paper document scan process. In response to a scan process instruction from the user, the scan unit 210 performs a scan process (S516).

As a paper document is scanned into document data in the image forming apparatus 200, the image processing unit 263 performs a process to convert the document data into a file format set in the scan condition setting unit (S517). After an image process is performed on the document data in S517, the encryption unit 262 determines whether the document data should be encrypted based on the settings in the encryption setting unit 268 (S518) .

If an encryption process is requested via the encryption setting unit 268, the encryption unit 262 performs a document data encryption process (S519), and delivers the encrypted document data to the designated encrypted folder using the delivery unit 264 (S520).

It is assumed that the user information about the user who has been authenticated by the user authentication server 300 in S510 is retained in the image forming apparatus 200 of the present embodiment. The image forming apparatus 200 then delivers the encrypted document data in association with the user information to the encrypted document server 400 using the delivery unit 264.

Upon reception of the encrypted document data and the associated user information, the control unit 410 in the encrypted document server 400 carries out a process to confirm access right. Specifically, it is determined whether access to the encrypted folder selected as the destination and a document data storing process are allowed based on the access right contained in the user information. If it is determined in the control unit 410 that access to the designated encrypted folder and a storing process are allowed, the encrypted document data is stored in the designated encrypted folder in the encrypted document server 400.

If it is determined in S518 that no encryption process is requested via the encryption setting unit 268, the image forming apparatus 200 does not perform encryption of the document data. Thus, the delivery unit 264 delivers the document data to the designated encrypted folder in clear text, where it is stored. In this case, too, the document data is associated with the user information when delivered to the encrypted document server 400. The process of storing the document data in the encrypted document server 400 is the same as described above.

In the image forming apparatus 200, upon completion of the delivery of the document data, the log acquisition unit 267 acquires log information about the series of operations (S521). If there is no more process to be continued (S522), the image forming apparatus 200 performs a process to log out of the system (S523), and completes the document data delivery process in the present embodiment. The logout process in S523 may be performed automatically upon indication of no continuing process on a selection screen displayed on the operating panel 250 in S522. Alternatively, the logout process may be initiated upon passage of a predetermined duration of time in which no process is performed in the image forming apparatus 200.

If it is indicated in S522 that the process should continue, the control unit 270 may cause a selection screen to be displayed on the operating panel 250, prompting the user to select whether or not a scan process is to be continued without changing the destination (S524). If the continuation of a scan process is selected, the image forming apparatus 200 resumes the process from S516. In the image forming apparatus 200 of the present embodiment, it is assumed that in S514, information indicating which encrypted folder is selected is temporarily stored in the storage device 295 as destination information.

If the user chooses not to continue a scan process in S524, the control unit 270 may cause a selection screen to be displayed on the operating panel 250 prompting the user to select whether the destination should be changed (S525). If in S525 no change of destination is selected, the control unit 270 determines that the process is to be terminated, and performs a logout process in S523.

If in S525 a change of destination is indicated, the image forming apparatus 200 resumes the process from S513.

The encryption process in S519 is described. The encryption unit 262 of the present embodiment is configured to perform a self-decrypting encryption process on the document data.

Upon starting an encryption process by the encryption unit 262 in S519, the image forming apparatus 200 accesses the user authentication server 300 and acquires the password of the user authenticated by the user information storage unit 320 in S510. The encryption unit 262 may encrypt the document data using the acquired password as a decrypting password.

In the image forming apparatus 200, a decrypting password may be set in the scan condition setting unit 266 in advance and stored in the storage device 295. When performing an encryption process, the decrypting password thus stored can be called from the storage device 295. Further, the scan condition setting unit 266 may be configured such that a setting can be made therein concerning which decrypting password is to be used in an encryption process. For example, the scan condition setting unit 366 may be configured such that whether a preset decrypting password or a password obtained from the user authentication server 300 is to be used can be selected, as shown in FIG. 9.

Thus, in accordance with the present embodiment, document data can be delivered directly from the image forming apparatus 200 to the encrypted document server 400. For example, when a classified paper document is to be managed in digitized form, a user only needs to select a destination and scan the document on the image forming apparatus 200, and then digitized document data can be directly stored in the encrypted document server 400.

In this way, the risk of information leakage between the phase of digitizing a paper document into document data and the phase of document data management can be avoided. Further, in accordance with the present embodiment, the operations between the digitization of a paper document into document data and the management of the document data in the encrypted document server 400 can be simplified. Thus, improved operability can be achieved while avoiding the risk of delivery error or the like due to an operation error.

Furthermore, in accordance with the present embodiment, since document data can be encrypted in the image forming apparatus 200 and then directly stored in the encrypted document server 400, the risk of information leakage can be avoided with higher probabilities.

While the foregoing embodiment involves the user authentication server 300 and the encrypted document server 400 that are separately provided, they may be integrated into a single server. In this case, the single server may contain a user information storage unit and encrypted folders to realize the same functions as those described above.

### Embodiment 2

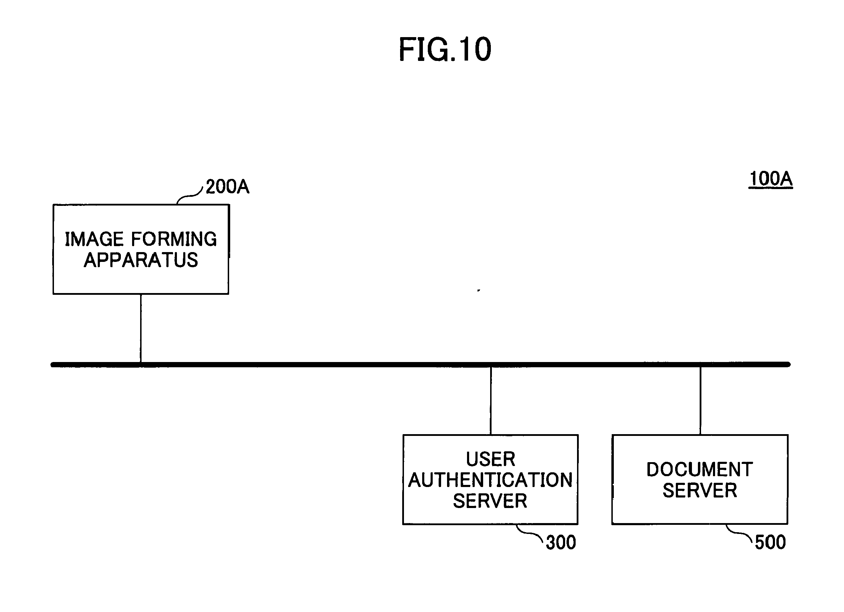

In the following, a second embodiment of the present invention is described with reference to the drawings. FIG. 10 shows a system configuration of a document management system 100A according to the second embodiment. The present embodiment differs from the first embodiment in that, instead of the encrypted document server 400, a conventional document server 500 is connected to an image forming apparatus 200A and a user authentication server 300. Thus, in the following description of the present embodiment, only the differences from the first embodiment are described, and parts or components of the second embodiment that are similar in function or structure to those of the first embodiment are designated with similar numerals.

A folder in the document server 500 of the present embodiment in which document data is stored is not encrypted. Thus, in the document server 500, there is no need for a control based on access right with regard to the delivery of document data. Therefore, in the image forming apparatus 200A of the present embodiment, a delivery process is performed without referring to the access right of a user stored in the authentication server 300.

In the image forming apparatus 200A, as a user enters user information and thus performs a login process to log-in to the system, the user authentication server 300 performs a user authentication process based on the user information. Upon successful user authentication, the image forming apparatus 200A encrypts relevant document data using the user information of the authenticated user, and then delivers the encrypted document data to the document server 500.

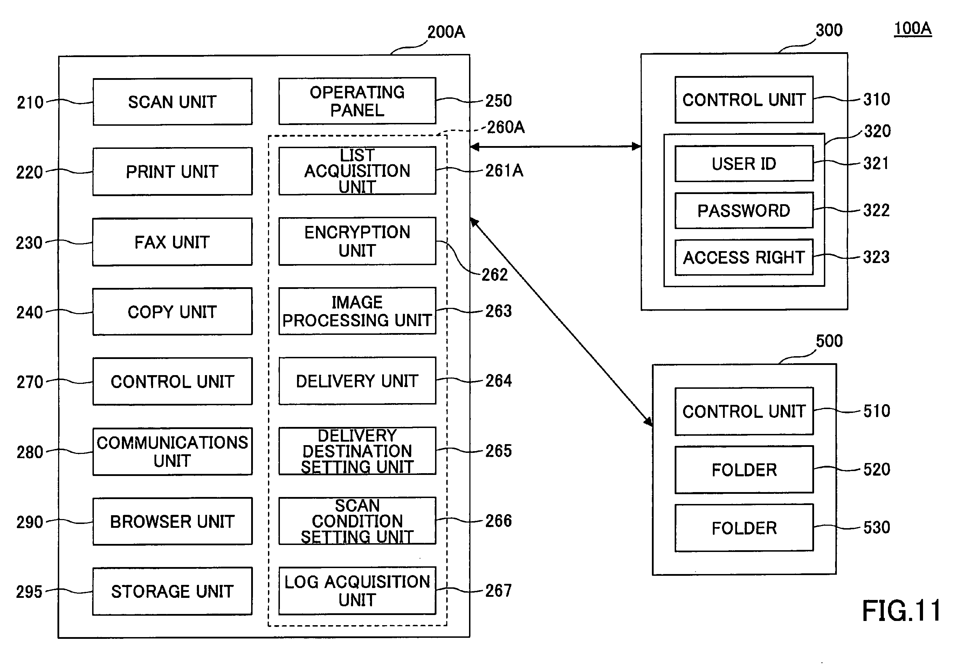

With reference to FIG. 11, individual units of the document management system 100A are described. FIG. 11 shows a functional configuration of the image forming apparatus 200A, the user authentication server 300, and the document server 500.

The image forming apparatus 200A comprises a client software 260A, which differs from the corresponding software of the first embodiment in that a list acquisition unit 261A is configured to acquire a list of all folders in the document server 500.

The document server 500 comprises a control unit 510 configured to control each process performed by the document server 500, and folders 520 and 530 in which document data is stored.

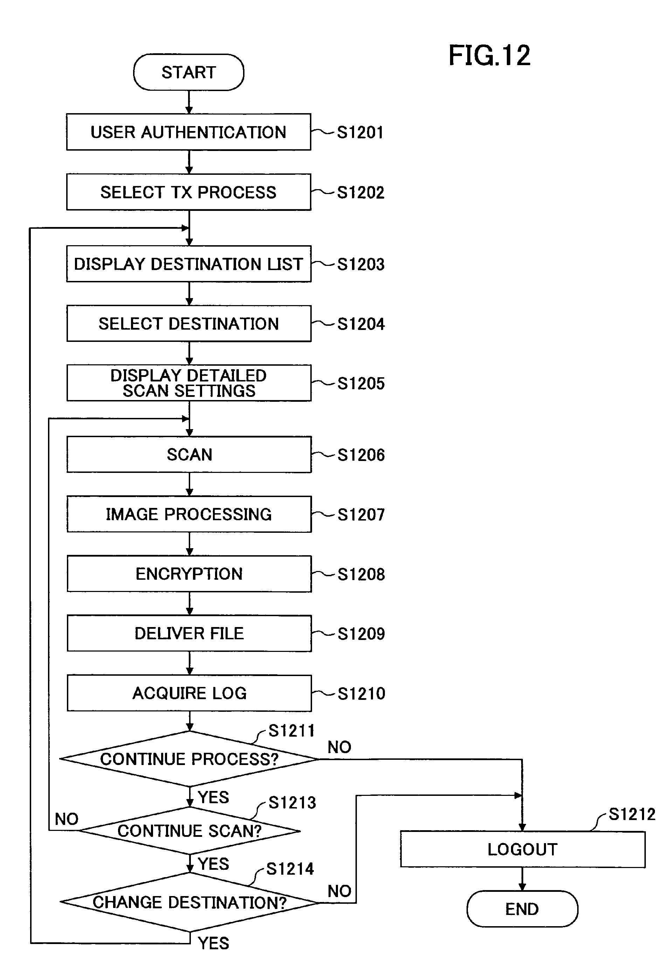

With reference to a flowchart shown in FIG. 12, the operation of the document management system 100A is described.

In the image forming apparatus 200A, as a classified document management process is selected and the client software 260A is started, and upon entry by a user of user information, the image forming apparatus 200A transmits the user information to the user authentication server 300, which performs a user authentication process (S1201).

After the user is authenticated in S1201, a process to deliver document data to the document server 500 is selected on the image forming apparatus 200A (S1202). The list acquisition unit 261A then accesses the document server 500 and acquires a list of folders in the server (S1203). The list acquired in S1203 is caused by the control unit 270 to be displayed on the operating panel 250 in a selectable manner. The display layout on the operating panel 250 and the display layout settings may be similar to those of the first embodiment.

On the image forming apparatus 200A, a folder as a document data destination is selected from the folder list displayed on the operating panel 250 (S1204). Then, the control unit 270 calls from the storage device 295 the scan conditions set in advance for the selected folder and causes them to be displayed on the operating panel 250 (S1205).

In the present embodiment, as in the first embodiment, information about the location of a destination and scan conditions, for example, can be set by referring to what is within the document server 500. These settings may be similar to those described with reference to the first embodiment. Namely, in the image forming apparatus 200A, too, the information about the location of a destination and scan conditions may be set via the operating panel 250 by referring to the document server 500 using the functions of the browser unit 290.

In the image forming apparatus 200A, after the scan condition settings are displayed in S1205, the scan unit 210 scans a paper document (S1206). The document data obtained by scanning is subjected to an image process by the image processing unit 263 (S1207), and then to an encryption process by the encryption unit 262 (S1208). Operation of the encryption unit 262 may be similar to the one described with reference to the first embodiment.

The steps from S1209 to S1214 shown in FIG. 12 are the same as steps S520 to S525 in FIG. 5 described with reference to the first embodiment and are therefore not described.

Thus, in accordance with the present embodiment, when a classified document is digitized into document data in the image forming apparatus 200A, the document data can be directly delivered from the image forming apparatus 200A to a destination in the document server 500. Furthermore, in accordance with the present embodiment, document data can be automatically encrypted and delivered to the general document server to which anyone has access regardless of access right.

Thus, in accordance with the present embodiment, the risk of information leakage between when a paper document is digitized into document data and when the document data is managed can be reduced. Furthermore, the operations between when a paper document is digitized into document data and when the document data is managed can be simplified, whereby the risk of delivery error or the like due to an operation error can be reduced.

### Embodiment 3

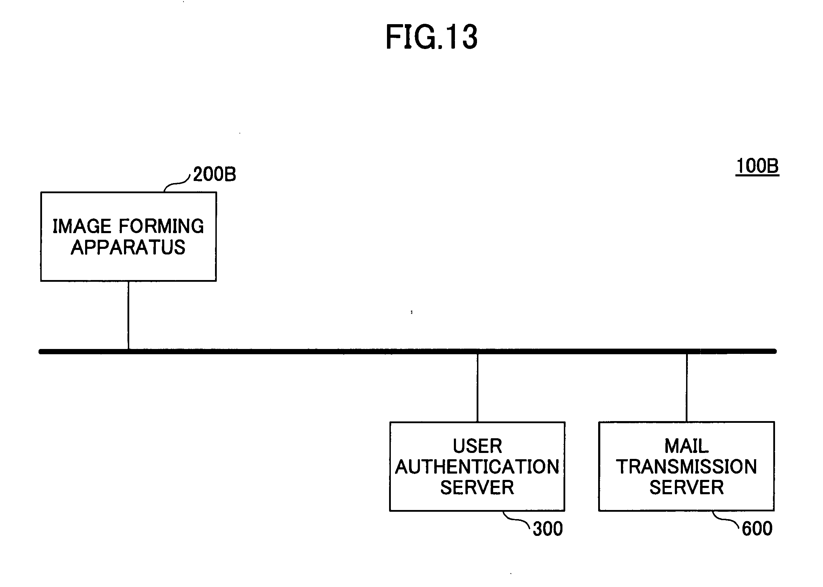

In the following, a third embodiment of the present invention is described with reference to the drawings. FIG. 13 shows a system configuration of a document management system 100B according to the third embodiment. The present embodiment differs from the first embodiment in that instead of the encrypted document server 400, a mail transmission server 600 is connected to an image forming apparatus 200B and a user authentication server 300. Thus, in the following description of the present embodiment, only the differences from the first embodiment are described, and parts or components similar in function or structure to those of the first embodiment are designated with similar numerals.

The image forming apparatus 200B is configured to deliver encrypted document data to the mail transmission server 600 by attaching it to electronic mail, so that the encrypted document data can be directly transmitted from the image forming apparatus 200B by mail.

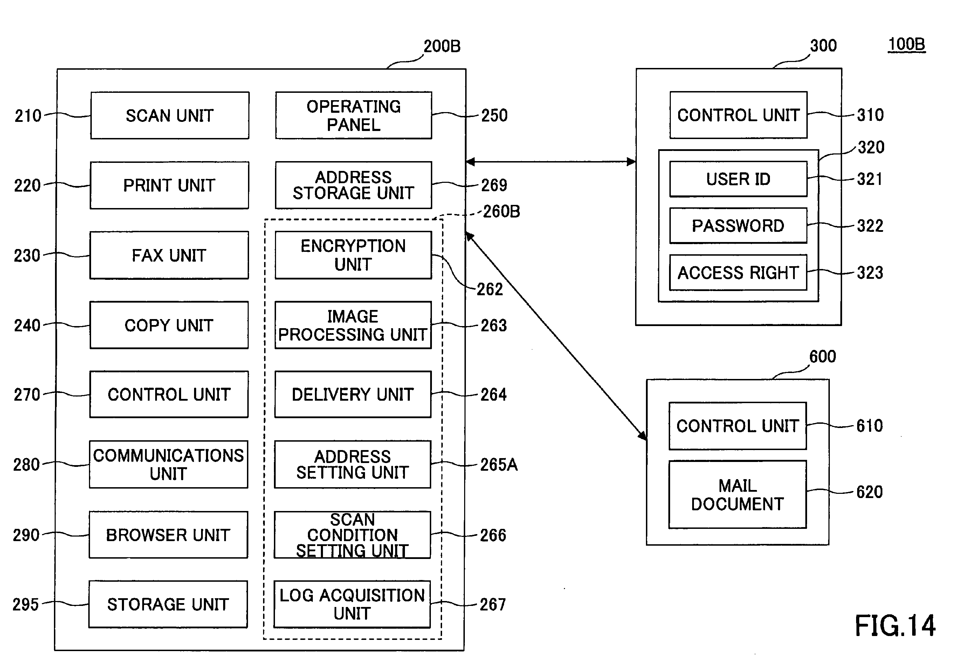

With reference to FIG. 14, the individual units of the document management system 100B are described in greater detail. FIG. 14 shows a functional configuration of the image forming apparatus 200B, the user authentication server 300, and the mail transmission server 600.

The image forming apparatus 200B is described below.

The image forming apparatus 200B comprises a destination address storage unit 269, which may be realized with a memory or a hard disk. The client software 260B in the image forming apparatus 200B comprises a destination address setting unit 265A.

In the image forming apparatus 200B, destination mail address information set by the destination address setting unit 265A is stored in the destination address storage unit 269. Document data obtained by the scan unit 210 is encrypted by the encryption unit 262 and then transmitted to a destination address selected from the mail address information stored in the destination address storage unit 269.

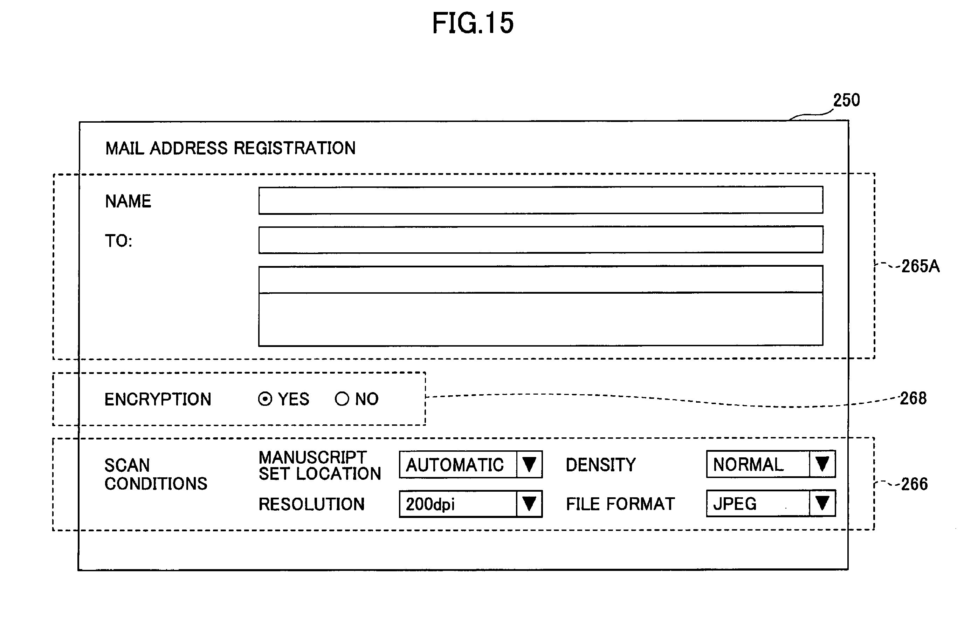

In the following, the destination address setting unit 265A is described with reference to FIG. 15.

The image forming apparatus 200B is configured such that a destination address setting screen is displayed on the operating panel 250 as shown in FIG. 15, on which a destination mail address and scan conditions for each destination mail address can be set.

In the destination address setting unit 265A implemented on the setting screen, the name of a transmission destination and a destination mail address can be entered and set. The scan condition setting unit 266 is implemented on the setting screen shown in FIG. 15 as described with reference to the first embodiment. Those settings may be made by a system administrator.

In accordance with the present embodiment, a destination address set by the destination address setting unit 265A and scan conditions set by the scan condition setting unit 266 are stored in the destination address storage unit 269 in association with each other. The setting screen shown in FIG. 15 may include an implementation of the encryption setting unit 268, as in the first embodiment.

Referring back to FIG. 14, the mail transmission server 600 is described. The mail transmission server 600, which may be a general server configured for mail transmission, comprises a control unit 610 and a mail document storage unit 620 in which mail documents are stored. In the present embodiment, the image forming apparatus 200B delivers a mail document attached with document data to the mail transmission sever 600, where the delivered mail document is stored in the mail document storage unit 620. The mail documents stored in the mail document storage unit 620 are successively transmitted to designated destination addresses.

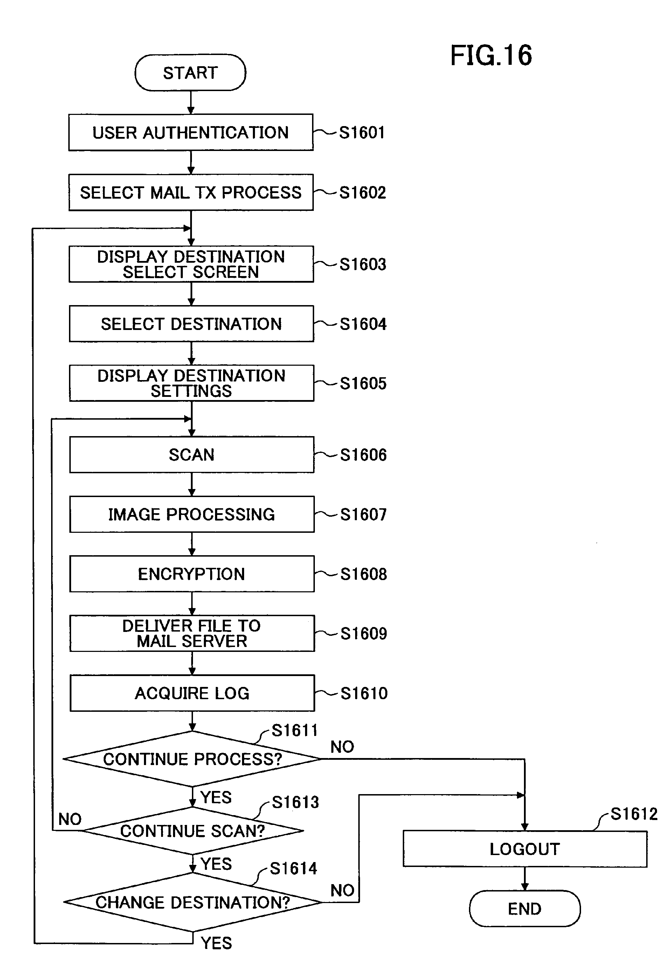

With reference to a flowchart shown in FIG. 16, the operation of the document management system 100B is described.

In the image forming apparatus 200B, as a classified document management process is selected and the client software 260B is started, and upon a user performing a login process, the image forming apparatus 200B transmits the user information to the user authentication server 300. In response, the user authentication server 300 performs an authentication process (S1601).

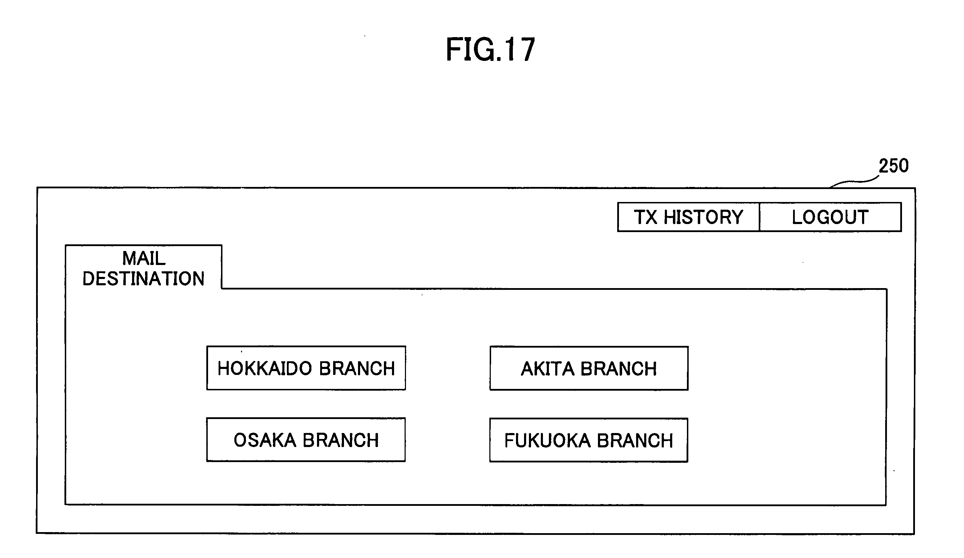

After a successful user authentication in S1601, a document data mail transmission process is selected in the image forming apparatus 200B (S1602). The control unit 270 then causes a list of destination addresses stored in the destination address storage unit 269 to be displayed on the operating panel 250 in a selectable manner (S1603). FIG. 17 shows an example of the list of destination addresses displayed on the operating panel 250 of the image forming apparatus 200B.

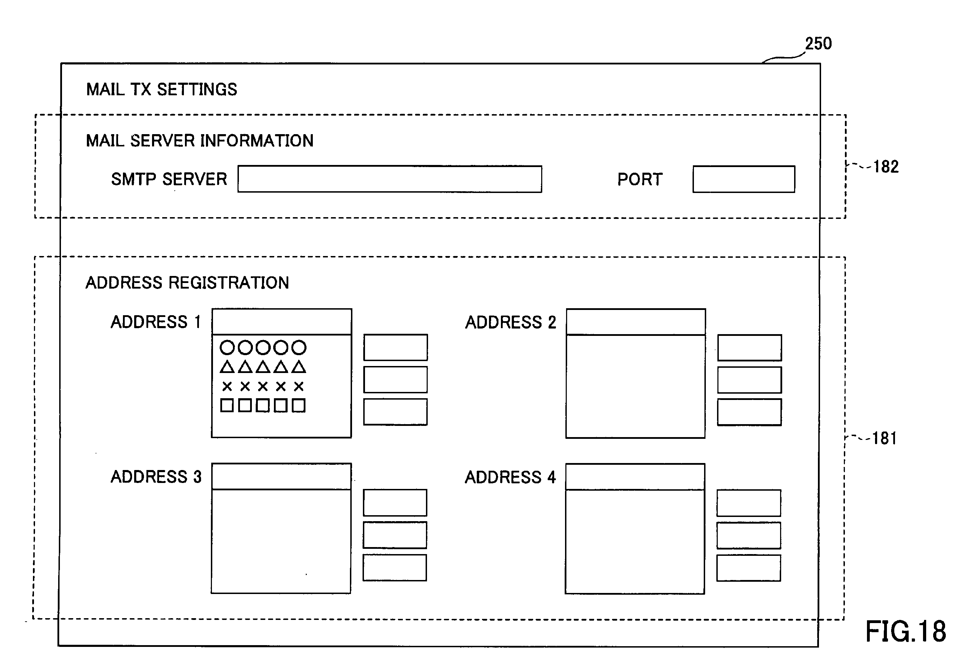

The display layout and the like of the operating panel 250 may be set in the image forming apparatus 200B in advance. In the image forming apparatus 200B of the present embodiment, information identifying the mail transmission server 600 to which a mail document attached with document data is delivered may be set in advance. For example, in the image forming apparatus 200B, a setting screen shown in FIG. 18 may be displayed on the operating panel 250.

On the setting screen shown in FIG. 18, the display layout of the operating panel 250 can be set via the display layout setting unit 181, in accordance with the addresses stored in the destination address storage unit 269. In the example shown in FIG. 18, four mail addresses are stored in the destination address storage unit 269. In this case, the display layout of the list of destination addresses displayed in S1603 is such that an address 1 is located in the first column on the first line, an address 2 is located in the second column on the first line, and so on. In this case, a setting may be made in the display layout setting unit 181 whereby a text is displayed for address 1 on the operating panel.

In the mail transmission server setting unit 182 implemented on the setting screen shown in FIG. 18 for setting information identifying the mail transmission server 600, information about the location of the mail transmission server 600, a port number, etc. are set.

In the following, the operation of the document management system 100B is further described with reference back to FIG. 16.

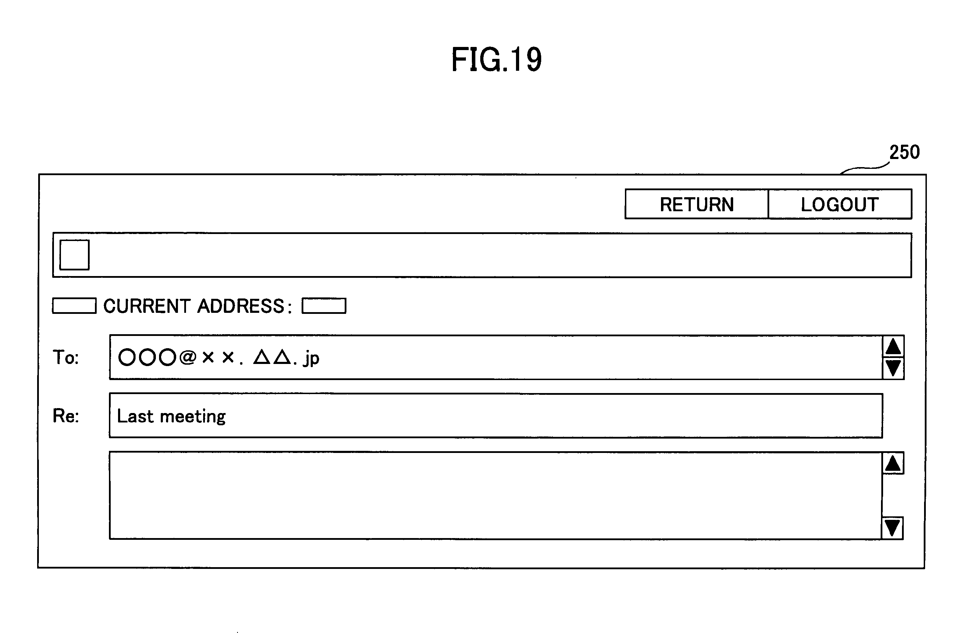

In the image forming apparatus 200B, after the destination address list is displayed on the operating panel 250 in S1603, a document data destination address is selected (S1604). The control unit 270 then calls the selected destination address from the destination address storage unit 269, and causes it to be displayed on the operating panel 250 (S1605). FIG. 19 shows an example of a selected destination address displayed on the operating panel 250.

Upon displaying of the document data destination address in S1605, the image forming apparatus 200B starts to scan a paper document (S1606).

The steps S1606 to S1608 are the same as the steps S1206 to S1208 shown in FIG. 5 described with reference to the second embodiment and are therefore not described.

After a document data encryption process is completed in S1608, the image forming apparatus 200B attaches the encrypted document data to a mail document, and delivers it to the mail transmission server 600 using the delivery unit 264 (S1609). The steps S1610 to S1614 shown in FIG. 16 are the same as the steps S521 to S525 shown in FIG. 5 and are therefore not described.

As described above, in accordance with the present embodiment, encrypted document data is attached to a mail document in the image forming apparatus 200B, whereby the encrypted document data can be directly delivered from the image forming apparatus 200B to the mail transmission server 600. Thus, by performing a mail transmission operation in the image forming apparatus 200B, encrypted document data can be transmitted directly by mail. In this way, the risk of information leakage during mail transmission can be reduced and the operations leading up to mail transmission can be simplified.

Furthermore, in accordance with the present embodiment, since destination addresses are set in advance, a user only needs to select one of the destination addresses. Thus, in accordance with the present embodiment, the risk of an operation error, such as entering an erroneous destination address, between when a paper document is digitized into document data and when document data can be managed can be avoided, while improved operability can be achieved.

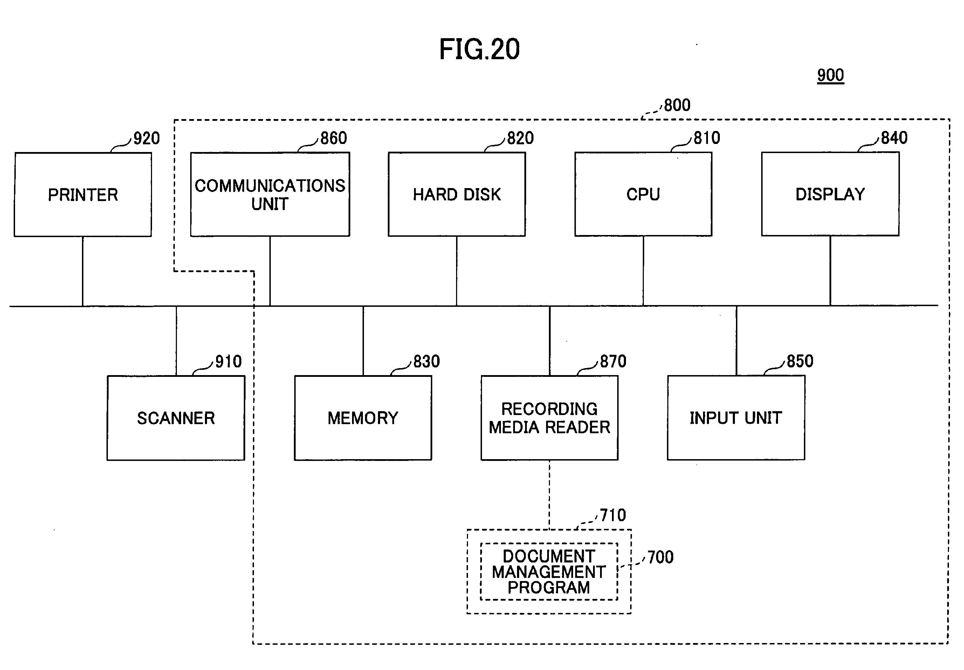

With reference to FIG. 20, a recording medium is described in which medium a document management program 700 for realizing each of the functions described with reference to the foregoing embodiments is recorded. The document management program 700 is readable by a computer 800 contained in an image forming apparatus 900 having a scan unit 910 and a print unit 920. The computer 800 is configured to read the document management program 700 recorded in a recording medium 710 with a recording medium reading unit 870 so that it can be executed to realize the functions described with reference to the foregoing embodiments in the image forming apparatus.

For example, the computer 800 comprises a CPU 810, a hard disk 820, a memory 830, a display unit 840, an input unit 850, a communications unit 860, and a recording media reading unit 870. The CPU 810 is a processing unit configured to perform operations and processes in the computer 800. The hard disk 820 is a data storage unit in which an application that runs on the computer 800 and data generated by the application are stored. In the memory 830, various setting values for the computer 800 and results of operations in the CPU 810 are stored.

The display unit 840 is configured to display data or the like generated in the computer 800 in a manner such that a user can view the data or the like. The input unit 850 may be a keyboard or a mouse operated by a user for entering various data. The communications unit 860 may comprise a network control unit allowing the computer 800 to perform communications with an outside device. The recording media reading unit 870 may be configured to read data or a program recorded in various types of recording media. An example of the recording media reading unit 870 is a flexible disk media drive.

The recording medium 710 may be a flexible disk medium or a CD-ROM (Compact Disk Read Only Memory) or any other type of media readable by the computer 800. Alternatively, the document management program 700 may be received by the communications unit 860 via a network and then stored in the hard disk 820.

While the present invention has been described with reference to specific embodiments, it should be obvious that those embodiments do not limit the present invention. Various changes and modifications may occur to those skilled in the art without departing from the scope of the invention.

The present invention may be utilized for systems, methods, and programs for managing document data, and image forming apparatus.

The present application is based on the Japanese Priority Application No. 2006-355644 filed December 28, 2006, the entire contents of which are hereby incorporated by reference.

## Claims

1. A document management system comprising:
an image forming apparatus having a scan unit configured to scan a paper document into document data;
a user authentication server configured to authenticate a user in which server user information including user identifying information is stored; and
a document server;
wherein the image forming apparatus comprises
a destination selection unit configured to select a destination in the document server where the document data obtained by the scan unit is to be stored; and
a delivery unit configured to deliver the document data to the destination in the document server selected by the destination selection unit.

2. The document management system according to claim 1, wherein the user information stored in the authentication server includes information about an access right of the user, and
the document server contains an encrypted folder for storing the document data,
the image forming apparatus further comprising a list acquisition unit configured to acquire a list of encrypted folders in the encrypted document server that can be accessed based on the access right of the user authenticated by the user authentication server,
wherein the destination selection unit of the image forming apparatus comprises a folder selection unit configured to select one of the encrypted folders in the list acquired by the list acquisition unit, as the destination for storing the document data, and
the delivery unit of the image forming apparatus is configured to deliver the document data to the encrypted folder selected by the folder selection unit.

3. The document management system according to claim 1, wherein the document server comprises a mail transmission server, and the image forming apparatus further comprises an address selection unit configured to select a mail address,
wherein the delivery unit is configured to deliver the document data obtained by the scan unit and a mail address selected by the address selection unit to the mail transmission server.

4. The document management system according to claim 1, wherein the image forming apparatus further comprises an encryption unit configured to encrypt the document data obtained by the scan unit, wherein the delivery unit delivers the document data encrypted by the encryption unit to the destination in the document server selected by the destination selection unit.

5. The document management system according to claim 1, wherein the image forming apparatus further comprises a destination setting unit configured to set information about a location in the document server, and the delivery unit delivers the encrypted document data to the document server based on the location information set by the destination setting unit.

6. The document management system according to claim 3, wherein the image forming apparatus comprises a mail address setting unit configured to set a mail address, and the address selection unit selects the mail address from mail addresses set by the mail address setting unit.

7. The document management system according to claim 4, wherein the encryption unit is configured to encrypt the document data with reference to the user identifying information concerning the user authenticated by the user authentication server.

8. The document management system according to claim 1, wherein the image forming apparatus further comprises:
a log information acquisition unit configured to acquire operation history information regarding an operation in the image forming apparatus; and
a log storage device configured to store the operation history information acquired by the log information acquisition unit.

9. The document management system according to claim 1, wherein the image forming apparatus further comprises a scan condition setting unit configured to set a scan condition based on which the scan unit performs a scan.

10. An image forming apparatus connected to a user authentication server for authenticating a user in which server user information including user identifying information is stored, the image forming apparatus being further connected to a document server and comprising:
a scan unit configured to scan a paper document into document data;
an encryption unit configured to encrypt the document data obtained by scanning the paper document by the scan unit;
a destination selection unit configured to select a destination in the document server where the document data encrypted by the encryption unit is to be stored; and
a delivery unit configured to deliver the encrypted document data to the destination in the document server selected by the destination selection unit.

11. The image forming apparatus according to claim 10, wherein the user identifying information stored in the user authentication server includes information about an access right of a user, and
the document server contains an encrypted folder for storing encrypted document,
the image forming apparatus further comprising a list acquisition unit configured to acquire a list of encrypted folders in the document server that can be accessed based on the access right of the user authenticated by the user authentication server,
wherein the destination selection unit of the image forming apparatus comprises a folder selection unit configured to select one of the encrypted folders in the list acquired by the list acquisition unit, as the destination for storing encrypted document data, and
the delivery unit of the image forming apparatus is configured to deliver the document data encrypted by the encryption unit to the encrypted folder selected by the destination selection unit.

12. The image forming apparatus according to claim 10, wherein the document server comprises a mail transmission server, the image forming apparatus further comprising an address selection unit configured to select a mail address,
wherein the delivery unit is configured to deliver the document data encrypted by the encryption unit and a mail address selected by the address selection unit to the mail transmission server.

13. A document management method for a document management system comprising an image forming apparatus having a scan unit configured to scan a paper document into document data; a user authentication server configured to authenticate a user in which server user information including user identifying information is stored; and a document server, the method comprising the image forming apparatus:
encrypting the document data obtained by scanning the paper document by the scan unit;
selecting a destination in the document server where the document data encrypted by the encryption unit is to be stored; and
delivering the encrypted document data to the destination in the document server selected by the destination selecting step.

14. The document management method according to claim 13, wherein the user identifying information stored in the user authentication server includes information about an access right of a user, and
the document server contains an encrypted folder for storing encrypted document,
the method further comprising the image forming apparatus:
acquiring a list of encrypted folders in the encrypted document server that can be accessed based on the access right of the user authenticated by the user authentication server;
selecting one of the encrypted folders in the list acquired by the list acquiring step, as the destination for storing the encrypted document data; and
delivering the document data encrypted by the encryption unit to the encrypted folder selected by the folder selecting step.

15. The document management method according to claim 13, wherein the document server comprises a mail transmission server, the method further comprising the image forming apparatus:
selecting a mail address; and
delivering the document data encrypted by the encrypting step and the mail address selected by the address selecting step to the mail transmission server.

16. The document management method according to claim 13, further comprising the image forming apparatus setting information about a location in the document server, the delivery step delivering the encrypted document data to the document server based on the location information set by the destination setting unit.

17. The document management method according to claim 15, further comprising the image forming apparatus setting a mail address, the address selecting step selecting the mail address from mail addresses set by the mail address setting unit.

18. The document management method according to claim 13, wherein the encrypting step comprises encrypting the document data with reference to the user identifying information concerning the user authenticated by the user authentication server.

19. The document management method according to claim 13, further comprising the image forming apparatus acquiring and storing operation history information regarding an operation in the image forming apparatus.

20. The document management method according to claim 13, further comprising the image forming apparatus setting a scan condition based on which the scan unit performs a scan.
